# EUROPÄISCHE PATENTSCHRIFT

(11) **EP 1 061 347 B1**
(45) Veröffentlichungstag und Bekanntmachung des Hinweises auf die Patenterteilung: **02.08.2006**
(21) Anmeldenummer: 00110141.9
(22) Anmeldetag: 11.05.2000
(51) Int. Cl.: G01G 19/414

(54) **Vorrichtung zur Gewichts- und/oder Sitzpositionsbestimmung eines Fahrzeuginsassen**
Apparatus for determinig the weight and/or the position of a vehicle passenger
Dispositif de détermination du poids et/ou de la position d'un occupant de véhicule

(30) Priorität: 04.06.1999 DE 19925662
(43) Veröffentlichungstag der Anmeldung: 20.12.2000
(73) Patentinhaber: Volkswagen Aktiengesellschaft, 38436 Wolfsburg (DE)
(72) Erfinder: Bahr, Ulrich, Dr., 38110 Braunschweig (DE); Keinberger, Franz, 38116 Braunschweig (DE); Oehm, Klaus, Dipl.-Ing., 38518 Gifhorn (DE)

(56) Entgegenhaltungen:
- EP-A- 0 945 316
- WO-A-98/25112
- WO-A-99/03711
- WO-A-99/24285

## Beschreibung

Die Erfindung betrifft eine Vorrichtung zur Gewichts- und/oder Sitzpositionsbestimmung eines auf einem Fahrzeugsitz befindlichen Fahrzeuginsassen, die mindestens einen Belastungssensor aufweist, dessen Ausgangssignal einer Auswerteeinrichtung der Vorrichtung zuführbar ist, durch welche aus dem mindestens einen ihr zugeführten Sensorsignal die auf die Sitzfläche des Fahrzeugsitzes einwirkende Gewichtsbelastung ermittelbar ist, wobei der Fahrzeugsitz über Fußelemente in am Karosserieboden des Fahrzeuges montierten Sitzschienen beweglich ist.

Um die Insassen von Fahrzeugen wirksamer zu schützen, werden in zunehmendem Maß Kraftfahrzeuge unter anderem mit einem Beifahrer-Airbag ausgestattet. Damit kein unnötiger Schaden entsteht, sollte der Beifahrer-Airbag bei einem Unfall nur dann ausgelöst werden können, wenn der Beifahrersitz belegt ist. Es ist daher in modernen Automobilen erforderlich, zu erfassen, ob der Beifahrersitz belegt ist oder nicht.

Hierzu ist es bekannt, daß in die Unterkonstruktion des Fahrzeugsitzes auf mechanischer Basis arbeitende Gewichtssensoren eingebaut werden. Eine derartige Maßnahme ist insbesondere deshalb aufwendig und daher unbefriedigend, da die Ausgangssignale der bei der bekannten Vorrichtung vorgesehenen vier Gewichtssensoren zu einer fahrzeugsitz-externen Auswerteeinrichtung geleitet werden müssen, die die Sensorsignale entsprechend verarbeitet. Die Übertragung der Sensorsignale vom Fahrzeugsitz, der in einer am Kraftfahrzeugchassis montierten Sitzschiene beweglich ist, zu der sitzexternen Auswerteeinrichtung ist aufgrund der Verschiebbarkeit des Fahrzeugsitzes nur mit großem Aufwand möglich.

Aus der DE 44 06 897 ist eine Vorrichtung zur Sitzbelegungserkennung für ein Kraftfahrzeug bekannt, bei der ein Sitzbelegungssensor verwendet wird, der einen vorderen und einen hinteren Sensierungsbereich aufweist, die jeweils separat auswertbar sind. Damit kann eine die Schutzwirkung des Airbags vermindernde Sitzposition des Beifahrers nahe der vorderen Sitzkante des Sitzpolster ermittelt und gegebenenfalls optisch oder akustisch angezeigt werden, oder es wird eine Sperrung einer Airbagauslösung vorgesehen. Der Sitzbelegungssensor ist hierbei als ein resistiver Foliendrucksensor ausgebildet.

Aus der WO 99/03711 ist ein Rückhaltesystem bekannt, welches das Gewicht eines Insassen bei der Auslösung von Schutzmaßnahmen berücksichtigt. Zum Messen des Gewichtes ist eine zwischen dem Fahrzeugsitz und dem Fahrzeugboden angeordnete Kraftmessdose vorgesehen.

Aus der DE-OS 196 25 890 ist ein Steuerverfahren für eine Sicherheitseinrichtung eines Kraftfahrzeugs bekannt, mit dem die Wirkungsweise der Sicherheitseinrichtung an das Gewicht des Fahrzeugbenutzers angepaßt wird, indem ein berührungslos arbeitender Sensor auf den Fahrzeugbenutzer ausgerichtet ist, welcher vor dem Auslösen der Sicherheitseinrichtung Körpermaße des Fahrzeugbenutzers mittels eines Sensors aufnimmt und aus den Körpermaßen mittels gespeicherter Daten das Gewicht des Fahrzeugbenutzers angenähert bestimmt. Die Verwendung eines auf den Fahrzeugbenutzer ausgerichteten, berührungslos arbeitenden Sensor besitzt zwar den Vorteil, daß dieser Sensor an der Fahrzeugkarosserie befestigt werden kann und somit das Problem der Übertragung der Sensorsignale vom Fahrzeugsitz zu der im Fahrzeug befindlichen Auswerteeinrichtung vermieden werden kann; jedoch ist eine derartige Lösung aufgrund der hierfür erforderlichen Sensoren und der aufwendigen Auswertung ebenfalls relativ kostenaufwendig.

Es ist daher Aufgabe der Erfindung, eine Vorrichtung der eingangs genannten Art derart weiterzubilden, daß in einfacher Art und Weise eine Gewichts- und/oder Sitzpositionsbestimmung eines Fahrzeuginsassen ermöglicht wird.

Diese Aufgabe wird erfindungsgemäß dadurch gelöst, daß der mindestens eine Belastungssensor als ein zumindest über einen Großteil der Erstreckung der Sitzschiene reichender, streifenförmiger Belastungssensor ausgebildet ist, der unter oder in der Sitzschiene des Fahrzeugs angeordnet ist.

Eine vorteilhafte Weiterbildung der Erfindung sieht vor, daß jeder der Sitzschienen ein Belastungssensor zugeordnet ist, und dass der mindestens eine Belastungssensor der Vorrichtung als eine drucksensitive, streifenförmige Folie ausgebildet ist, die auf dem Karosserieboden des Kraftfahrzeuges angeordnet ist und von den in der jeweiligen Sitzschiene beweglichen Elementen der Unterkonstruktion des Fahrzeugsitzes beaufschlagbar.

Eine vorteilhafte Weiterbildung der Erfindung sieht vor, daß der als eine drucksensitive Folie ausgebildete, auf dem Karosserieboden aufgebrachte Belastungssensor - insbesondere durch Siebdruck - aufgedruckt ist. Eine derartige erfindungsgemäße Maßnahme besitzt den Vorteil, daß hierdurch in kostengünstiger Art und Weise ein Belastungssensor herstellbar ist.

Eine weitere vorteilhafte Weiterbildung der Erfindung sieht vor, daß der Belastungssensor ortsauflösend ausgebildet ist. Eine derartige Vorgangsweise besitzt den Vorteil, daß es in einfacher Art und Weise mit der erfindungsgemäßen Vorrichtung möglich ist, die Position des Fahrzeugsitzes im Fahrzeug selbst zu bestimmen, indem der Ort der Druckbeauschlagung des oder der Belastungssensoren ermittelt wird.

Eine weitere vorteilhafte Weiterbildung der Erfindung sieht vor, daß über die drucksensitive Folie eine verschleiß- und/oder bruchfeste Abdeckungsschicht, insbesondere eine Metallschicht, angeordnet ist. Eine derartige Maßnahme besitzt den Vorteil, daß hierdurch eine Beschädigung der drucksensitiven Folien weitgehend verhindert wird.

Weitere vorteilhafte Weiterbildungen der Erfindung sind Gegenstand der abhängigen Ansprüche:

Weitere Einzelheiten und Vorteile der Erfindung sind dem Ausführungsbeispiel zu entnehmen, daß im folgenden anhand der Figuren beschrieben wird. Es zeigen:
Figur 1 ein Ausführungsbeispiel der Vorrichtung,
Figur 2eine Ansicht des Ausführungsbeispiels aus der Richtung II der Figur 1.

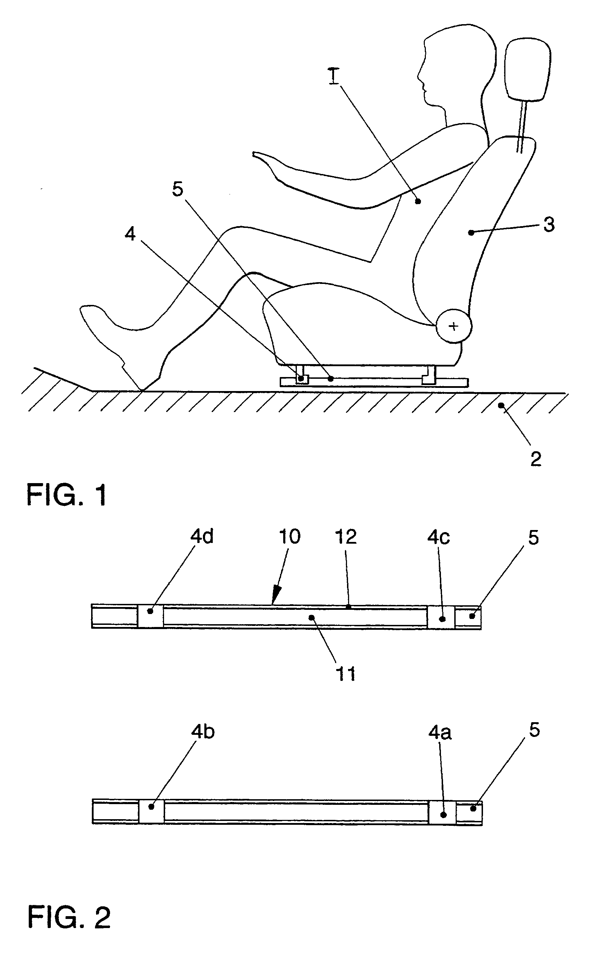

In Figur 1 ist nun schematisch ein auf einem Karosserieboden 2 eines nicht näher dargestellten Kraftfahrzeugs montierter Fahrzeugsitz 3 dargestellt, dessen Unterkonstruktion 4 in Sitzschienen 5 verschiebbar aufgenommen ist, indem Fußelemente 4a-4d der Unterkonstruktion 4 des Fahrzeugsitzes 3 in den Sitzschienen 5 verschiebbar beweglich angeordnet sind. Eine derartige Konstruktion ist bekannt und muß daher nicht mehr näher beschrieben werden.

Um nun in einfacher Art und Weise eine Gewichtsbestimmung und somit eine Sitzbelegungsklassifizierung und/oder eine Sitzpositionsbestimmung durch eine Erfassung des den Fahrzeugsitz 3 beaufschlagenden Gewichtes durchführen zu können, ist nun vorgesehen, daß im Bereich mindestens einer Sitzschiene 5 am Karosserieboden ein sich zumindest über einen Großteil der Erstreckung der Sitzschiene reichender, streifenförmiger Belastungssensor 10 angeordnet ist. Die Anordnung eines Belastungssensors 10 am Karosserieboden besitzt gegenüber der bis jetzt bekannten Anordnung von Druckmeßzellen in der Unterkonstruktion des Fahrzeugsitzes den Vorteil, daß hierdurch besonders einfach eine Übertragung von Ausgangssignalen des Belastungssensors 10 zu einer nicht dargestellten Auswerteeinrichtung möglich ist, da der Belastungssensor 10 ortsfest am Karosserieboden 2 und nicht - wie beim Stand der Technik - an relativ zum Karosserieboden 2 beweglichen Teilen des Kraftfahrzeugsitzes angeordnet ist.

Hierbei wird bevorzugt, daß der Belastungssensor 10 - wie am besten aus Figur 2 ersichtlich ist - im wesentlichen als eine drucksensitive Folie 11 ausgebildet ist, welche vorzugsweise mittels eines Siebdruckverfahrens auf den Karosserieboden 2 aufgebracht ist. Die Verwendung eines derartigen drucksensitiven Foliensensors besitzt den Vorteil einer einfachen und daher kostengünstigen Herstellung. Wie ebenfalls der Figur 1 zu entnehmen ist, wird bevorzugt, daß die drucksensitive Folie 11 mit einer verschleißfesten oder zumindest verschleißhemmenden und/oder bruchfesten Schicht, vorzugsweise einer Metallschicht 12, überdeckt ist, um den Verschleiß des Belastungssensors 10 durch den sich auf ihm bewegenden Fahrzeugsitz 3 zu reduzieren.

Die Funktionsweise der Vorrichtung 1 wird nun anhand einer exemplarischen Auswahl von Sitzpositionen erläutert: Ein Fahrzeuginsasse I, der in einer "normalen" Sitzposition auf dem Fahrzeugsitz 3 Platz genommen hat, belastet demzufolge die vier Füße 4a-4d der Unterkonstruktion 4 des Fahrzeugsitzes 3 derart, daß die hinteren Füße 4a, 4c der Unterkonstruktion 4 des Fahrzeugsitzes 3 mit einer geringfügig höheren Kraft auf den unter den Füßen 4a-4c liegenden Bereich der beiden Belastungssensoren 10 drücken als auf die vorderen Füße 4b, 4d. Die von den ortsauflösenden Belastungssensoren 10 erzeugten Ausgangssignale S, welche die vorstehend beschriebene Druckverteilung repräsentieren, werden von einer Auswerteeinrichtung A ausgewertet, so daß das Gewicht und die ungefähre Sitzposition des Fahrzeuginsassen I auf dem Fahrzeugsitz 3 bestimmbar ist.

Hierzu muß noch angemerkt werden, daß durch die beschriebene Vorgangsweise es in einfacher Art und Weise auch möglich ist, die Position des Fahrzeugsitzes 3 im Fahrzeug selbst zu bestimmen, indem der Ort der Druckbeaufschlagung der Belastungssensoren 10 ermittelt wird.

Ändert nun der Fahrzeuginsasse I seine Sitzposition, indem er sich weiter zurücklehnt, so resultiert diese Positionsänderung in einer Änderung der Gewichtsbeaufschlagung der Füße 4a-4d der Unterkonstruktion 4 des Fahrzeugsitzes 3, da bei dieser Stellung die beiden hinteren Füßen 4a, 4c der Unterkonstruktion 4 in noch höherem Maße belastet werden als in der vorher beschriebenen Sitzposition, so daß aus der nun vorliegenden, über die Füße 4a-4d auf die Belastungssensoren 10 übertragenen Gewichtsverteilung auf die geänderte Sitzposition des Fahrzeuginsassen I geschlossen werden kann.

Dem Fachmann ist aus obigen Ausführungen ersichtlich, wie sich weitere Sitzpositionsveränderungen des Fahrzeuginsassen I auf die Belastung des Sensoren 10 und somit auf die Ausgangssignale S dieser Belastungssensoren 10 auswirken, weshalb auf eine weitere Beschreibung hier verzichtet werden kann.

Zusammenfassend ist festzustellen, daß die beschriebene Anordnung in einfacher Art und Weise erlaubt, das Gewicht des Fahrzeuginsassen zu bestimmen und/oder seine Sitzposition abzuschätzen. Die Verwendung von ortsauflösenden Belastungssensoren 10 erlaubt es weiterhin, auch die Position des Fahrzeugsitzes in Kraftfahrzeug selbst zuverlässig zu bestimmen.

## Patentansprüche

1. Vorrichtung zur Gewichts- und/oder Sitzpositionsbestimmung eines auf einem Fahrzeugsitz (3) befindlichen Fahrzeuginsassen (I), die mindestens einen Belastungssensor (10) aufweist, dessen Ausgangssignal einer Auswerteeinrichtung der Vorrichtung zuführbar ist, durch welche aus dem mindestens einen ihr zugeführten Sensorsignal die auf einen Fahrzeugsitz (3) einwirkende Gewichtsbelastung ermittelbar ist, wobei der Fahrzeugsitz (3) über Fußelemente (4a-4d) in am Karosserieboden (2) des Fahrzeuges montierten Sitzschienen (5) beweglich ist,
**dadurch gekennzeichnet, daß**
der mindestens eine Belastungssensor (10) als ein zumindest über einen Großteil der Erstreckung einer der Sitzschienen (5) reichender, streifenförmiger Belastungssensor (10) ausgebildet ist, der unter oder in der Sitzschiene (5) des Fahrzeugs angeordnet ist.

2. Vorrichtung nach Anspruch 1, **dadurch gekennzeichnet, daß** jeder Sitzschiene (5) ein Belastungssensor (10) zugeordnet ist.

3. Vorrichtung nach Anspruch 1 oder 2,
**dadurch gekennzeichnet, daß** der
mindestens eine Belastungssensor (10) der Vorrichtung als eine drucksensitive, streifenförmige Folie (11) ausgebildet ist, die auf dem Karosserieboden des Kraftfahrzeuges angeordnet ist und von den in der Sitzschiene (5) des Kraftfahrzeugs beweglichen Elementen (4a,b; 4c,d) der Unterkonstruktion (4) des Fahrzeugsitzes (3) beaufschlagbar ist.

4. Vorrichtung nach einem der vorhergehenden Ansprüche,
**dadurch gekennzeichnet, daß**
der mindestens eine als eine drucksensitive Folie (11) ausgebildete Belastungssensor (10) durch ein Siebdruckverfahren auf den Karosserieboden aufgebracht ist.

5. Vorrichtung nach einem der vorangehenden Ansprüche,
**dadurch gekennzeichnet, daß**
der mindestens eine Belastungssensor (10) ortsauflösend ausgebildet ist.

6. Vorrichtung nach einem der vorangehenden Ansprüche,
**dadurch gekennzeichnet, daß**
der mindestens eine streifenförmige Belastungssensor (10) von einer verschleißfesten oder zumindest verschleißhemmenden und/oder bruchfesten Schicht (12) überdeckt ist.

## Claims

1. Apparatus for determining the weight and/or the seated position of a vehicle occupant (I) seated on a vehicle seat (3), the apparatus comprising at least one load sensor (10), the output signal from which can be fed to an evaluation device of the apparatus, which from at least one sensor signal fed to it is capable of determining the weight loading acting on a vehicle seat (3), the vehicle seat (3) being moveable by way of foot elements (4a-4d) in seat rails (5) mounted on the body floor (2) of the vehicle, **characterized in that** at least one load sensor (10) takes the form of a lamellar load sensor (10), which extends over at least a greater part of the length of one of the seat rails (5) and is arranged beneath or inside the vehicle seat rail (5).

2. Apparatus according to Claim 1, **characterized in that** a load sensor (10) is assigned to each seat rail (5).

3. Apparatus according to Claim 1 or 2, **characterized in that** at least one load sensor (10) of the apparatus takes the form of a pressure-sensitive, lamellar film (11), which is arranged on the body floor of the motor vehicle and can be acted upon by the elements (4a, b; 4c, d) of the substructure (4) of the vehicle seat (3) moveable in the seat rail (5) of the motor vehicle.

4. Apparatus according to any one of the preceding Claims, **characterized in that** at least one load sensor (10) in the form of a pressure-sensitive film (11) is applied to the body floor by a screen printing process.

5. Apparatus according to any one of the preceding Claims, **characterized in that** at least one load sensor (10) is of a design with local resolution capability.

6. Apparatus according to any one of the preceding Claims, **characterized in that** the at least one lamellar load sensor (10) is covered by a wear-resistant or at least wear-inhibiting and/or unbreakable layer (12).

## Revendications

1. Dispositif pour déterminer le poids et/ou la position assise d'un occupant du véhicule (I) qui se trouve sur un siège du véhicule (3), lequel présente au moins un capteur de charge (10) dont le signal de sortie peut être acheminé à un dispositif d'évaluation du dispositif, par lequel la contrainte de poids agissant sur un siège de véhicule (3) peut être déterminée à partir de l'au moins un signal de capteur qui lui est acheminé, le siège de véhicule (3) pouvant être déplacé par le biais d'éléments de pied (4a-4d) dans des rails de siège (5) montés sur le fond de la carrosserie (2) du véhicule, **caractérisé en ce que** l'au moins un capteur de charge (10) est réalisé sous la forme d'un capteur de charge (10) en forme de bande qui s'étend au moins sur une grande partie de la projection de l'un des rails de siège (5), lequel est disposé sous ou dans le rail de siège (5) du véhicule.

2. Dispositif selon la revendication 1,
**caractérisé en ce qu'**un capteur de charge (10) est associé à chaque rail de siège (5).

3. Dispositif selon la revendication 1 ou 2,
**caractérisé en ce que** l'au moins un capteur de charge (10) du dispositif est réalisé sous la forme d'une membrane (11) en forme de bande sensible à la pression qui est disposée sur le fond de la carrosserie du véhicule automobile et qui est sollicitée par les éléments (4a, b ; 4c, d) de l'infrastructure (4) du siège de véhicule (3) qui sont mobiles dans le rail de siège (5) du véhicule automobile.

4. Dispositif selon l'une des revendications précédentes, **caractérisé en ce que** l'au moins un capteur de charge (10) réalisé sous la forme d'une membrane (11) sensible à la pression est appliqué sur le fond de la carrosserie par un procédé de sérigraphie.

5. Dispositif selon l'une des revendications précédentes, **caractérisé en ce que** l'au moins un capteur de charge (10) est réalisé avec résolution du positionnement.

6. Dispositif selon l'une des revendications précédentes, **caractérisé en ce que** l'au moins un capteur de charge (10) en forme de bande est recouvert par une couche (12) résistante à l'usure ou au moins ralentissant l'usure et/ou résistante à la rupture.
